(19) Europäisches Patentamt / European Patent Office / Office européen des brevets

(11) **EP 4 351 043 A1**

(12) **EUROPEAN PATENT APPLICATION**

(43) Date of publication:
**10.04.2024   Bulletin 2024/15**

(21) Application number: **22382931.8**

(22) Date of filing: **05.10.2022**

(51) International Patent Classification (IPC):
**H04B 10/70** $^{(2013.01)}$         **H04B 10/50** $^{(2013.01)}$

(52) Cooperative Patent Classification (CPC):
**H04B 10/70; H04B 10/505**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Fundació Institut de Ciències Fotòniques
08860 Castelldefels (Barcelona) (ES)**
• **Institució Catalana De Recerca I
Estudis Avançats (ICREA)
08010 Barcelona (ES)**

(72) Inventors:
• **López Grande, Ignacio
Barcelona (ES)**
• **Stein, Abigail
Barcelona (ES)**
• **Pruneri, Valerio
Barcelona (ES)**

(74) Representative: **Grünecker Patent- und
Rechtsanwälte
PartG mbB
Leopoldstraße 4
80802 München (DE)**

(54) **OPTICAL SYSTEM FOR PHASE MODULATION**

(57)     An optical system configured to apply a relative phase modulation between two orthogonal polarization modes using a double pass configuration, wherein the system is configured to act independently on each polarization state.

FIG. 1

**Description**

**Field of the invention**

The present invention relates to an optical system for phase modulation in optical and quantum communication, in particular in Quantum Key Distribution.

**Background**

Quantum Key Distribution (QKD) is a technique that allows users to distribute secure cryptographic keys between distant parties. The uniqueness of QKD is related to the fact that, when combined with robust encryption methods such as One-Time-Pad, it provides information theoretic-secure encryption whose validity relays solely on the validity of the laws of Quantum Mechanics. This fact differentiates it from all classical key generation systems whose security relies on assumptions on the computational complexity of certain mathematical problems.

Standard QKD approaches use quantum states of light as information carriers, as for example disclosed in Gisin, Nicolas, et al. "Quantum cryptography." Reviews of modern physics 74.1 (2002): 145, and thus QKD communications represent a particular type of optical communications that, in general, operate over optical channels such as optical fiber and free-space. The implementation of QKD protocols requires encoding into one or several degrees of freedom (DoF) of quantum states of light. Depending on the discrete or continuous nature of the DoFs selected, the QKD protocols can be divided into Discrete Variable (DV) and Continuous Variable (CV) QKD protocol families, respectively. The development and deployment of full-scale QKD for global secure communications will demand the development of different infrastructural segments, each with a specific set of characteristics and performance requirements. For instance, short-range links using metropolitan access networks, longer inter-city links, and long-range links for intercontinental communications will each have unique infrastructural requirements. Different protocols and devices have been developed to best fit to the constraints of each segment, as for example described in Wang, Jing, and Bernardo A. Huberman. "A Guide to the Deployment of Global Quantum Key Distribution Networks." Future of Information and Communication Conference. Springer, Cham, 2022.

In the following, firstly, an overview of the most widely studied QKD protocol BB84, named after its developers Bennet and Brassard in 1984, is given. BB84 uses a set of four quantum states that constitute two mutually-unbiased bases (MUBs). For instance, when encoded with polarization states, the two mutually-unbiased bases used in the BB84 protocol may be selected from the following set of three mutually-unbiased polarization bases:

1. The linearly-polarized states oriented towards 0 and $\pi$ on the Bloch sphere equator (the "Horizontal" $|H\rangle$ and "Vertical" $|V\rangle$ states).

2. The linearly-polarized $\dfrac{\pi}{2}$ and $\dfrac{3}{2}\pi$ states (the "Diagonal", $|D\rangle = \dfrac{|H\rangle + |V\rangle}{\sqrt{2}}$ and "Anti-Diagonal", $|A\rangle = \dfrac{|H\rangle - |V\rangle}{\sqrt{2}}$ states).

3. The circularly polarized states with axes oriented towards the Bloch sphere poles (the "Circular Right", $|R\rangle = \dfrac{|H\rangle + i|V\rangle}{\sqrt{2}}$ and "Circular Left", $|L\rangle = \dfrac{|H\rangle - i|V\rangle}{\sqrt{2}}$ states).

In the following discussion, the Diagonal/Anti-Diagonal and Circular Left/Circular Right bases will be used. However, this is merely for the sake of simplicity. To implement the BB84 protocol, a simultaneous encoding of the bits "0" and "1" is performed using the states from each polarization basis. The protocol begins with the transmitter, canonically labeled "Alice," preparing single-photon pulses. In each pulse, Alice randomly encodes a bit by impinging the light field with a polarization from the set of four states. Alice keeps track of both the encoded bit and encoding basis for each pulse but does not reveal these values. Subsequently, the polarization encoded signals are transmitted to the receiver (labeled "Bob") through a quantum channel (typically either optical fiber or free-space). Upon receiving the pulses, Bob decodes the transmitted bits by measuring their polarizations. To do so, Bob randomly selects a detection basis (either the Diagonal or the Circular basis). Bob's choice of measurement basis is independent of Alice's encoding basis. Each time the emission and detection bases coincide (which will, a priori, occur with uniform random probability of 50%), Bob will decode a bit that is, in principle, perfectly correlated to the one encoded by Alice. However, when Bob choses the wrong basis, the generated bits present no correlation. At this point Alice and Bob share a partially correlated key called the "raw-key."

Subsequently, a sifting procedure is carried out where the parties announce the encoding and decoding bases chosen for each symbol and discard the data where the bases do not match. The so-called "sifted-key" is thus obtained.

Next, the parties estimate the correlation between their "sifted-keys" by publicly announcing a randomly-selected subset of bits which are then discarded from the "sifted-keys".

A key parameter of any QKD implementation is the mean Quantum Bit Error Rate (QBER), which quantifies the probability of errors in the sifted-keys. Any drop in correlation levels is attributed to external intervention by a channel eavesdropper (labeled "Eve"). The maximum amount of information that Eve can obtain from the key generation process is determined by this drop in correlation. The remaining data is used to extract a secret key by means of error-correction and privacy amplification algorithms, as for example described in Gisin, Nicolas, et al. "Quantum cryptography." Reviews of modern physics 74.1 (2002): 145, which find the errors between the sifted-keys with extremely high probability and eliminate the information that is determined to have been potentially compromised by the eavesdropper, thus reducing the size of the "sifted-key". It is worth mentioning that inherent bit-errors generated by losses in the quantum channel or imperfections in the transmitting and detection devices are also considered to be the result of the malicious action of Eve. Because of this, it is important to have quantum channels that preserves the quantum states, as well as schemes to prepare them that are simple, robust and stable.

A simplified variant of the standard four state BB84 QKD protocol uses only three states. In this implementation, two of the three states must resemble an orthogonal basis, and the remaining one must belong to a mutually unbiased basis (e.g., $|D\rangle$, $|A\rangle$ and $|R\rangle$, respectively). The security of this simplified protocol is analogous to the standard BB84 protocol. The two states that complete a basis are used to encode the 0 and 1 bits and the remaining polarization state is used estimate the quantity of information obtained by the eavesdropper in the key generation process.

As mentioned above, BB84 and DV-QKD protocols in general rely on single photons pulses to encode the random bits and generate the secret key. A practical approach to generating single-photon pulses is to strongly attenuated laser pulses. The coherent states that are generated by a laser used in this regime exhibit a Poissonian distribution in the number of photons per pulse. However, this opens a security problem, because Eve could obtain information from the pulses that carry more than one photon by means of the photon number-splitting attacks. To overcome this, vulnerability the "Decoy-State method" was proposed in Lo, Hoi-Kwong, Xiongfeng Ma, and Kai Chen. "Decoy state quantum key distribution." Physical review letters 94.23 (2005): 230504. In this implementation, the user estimates the number of quantum states received with a single photon by distributing additional signals, called "decoy states." These decoy signal presents the same polarization random distribution as the signals used for generating the key, but differ in their mean photon number. This method is widely used as it extends the maximum achievable distance between the intervening parties (maximum tolerated loss) when Poissonian single-photon sources are used.

Several valid methods exist for implementing polarization based DV-QKD transmitters in hardware. For example, it is possible to generate the polarization states by using multiplexed pulsed lasers, as described, for example, in Ko, Heasin, et al. "High-speed and high-performance polarization-based quantum key distribution system without side channel effects caused by multiple lasers." Photonics Research 6.3 (2018): 214-219. More commonly, each polarization state is produced by using an individual laser with passive polarization control components, such as waveplates, polarizers, or polarization maintaining fibers. However, these schemes generally require a large amount of optical components. Using multiple lasers has the additional disadvantage of enabling side channel attacks due to distinguishability in the wavelength spectrum used or emission time and temporal shape of the pulses generated by the different sources. Although such potential distinguishabilites had been initially characterized, the different aging of the devices can give rise to side channels (slow laser wavelengths, drifts in intensity or emission time after aging) that appear after long operation times. These effects render the multiple laser schemes potentially unsafe from the outset, or at the very least, impose limitations on their lifetimes.

Accordingly, transmitters have been developed which are based on a single light source, as for example described in Grünenfelder, F., Boaron, A., Rusca, D., Martin, A., & Zbinden, H. (2020), Performance and security of 5 GHz repetition rate polarization-based quantum key distribution, Applied Physics Letters, 117(14), 144003. Most such schemes begin with the generation of an initial polarization superposition state, e.g: $|D\rangle = \frac{|H\rangle + |V\rangle}{\sqrt{2}}$ . As described above, D represents the linear Diagonal polarization state of light and H and V the Vertical and Horizontal polarization modes, respectively. Then by impinging a relative phase difference between these two polarization modes (H and V) it is possible to achieve the required set of polarization states.

However, due to physical characteristics inherent in QKD protocols, the performance of these systems is much more susceptible to device imperfections or hardware instabilities than classical communications systems. For this reason, precise control of the stability of parameters, like electrical signals, temperature and mechanical vibrations and drifts, is required in all implementations.

Thus, existing systems for the relative phase modulation and polarization modulation needed for QKD are complex, require a high effective operating voltage and often do not possess an intrinsic stability.

It is therefore the object of the present invention to provide an optical system that overcome these disadvantages. It is to be noted that such a system is not only applicable to QKD but any other optical implementation, which requires different polarization modes to represent quantum states of light that can be used to encode classical bits.

**Summary of the invention**

This object is achieved with an optical system according to claim 1. Preferred embodiments are set forth in the dependent claims.

The optical system is configured to apply a relative phase modulation between two orthogonal polarization modes using a double pass configuration, wherein the system is configured to act independently on each polarization state.

Here and in the following, the term "double pass configuration" refers to a configuration in which at least one of the polarization modes, in particular both, passes through at least some of the optical elements of the optical system at least twice. In particular, the at least some of the optical elements comprise optical elements that modify the polarization of the at least one of the polarization modes.

In particular in the case where both polarization modes pass through at least some of the same optical elements twice, i.e., where they take the same optical path, the system may be designed such that it is inherently stable against mechanical and/or thermal fluctuations. The reason for this is that such fluctuations occur on timescales that are typically orders of magnitudes larger than the roundtrip time of the polarization modes in the optical system. The stability can be enhanced even further if at least some of the optical elements are passive elements, such as a Faraday mirror.

The optical system may be part of a transmitter for optical communication for fiber-based and/or free-space based optical communication. In particular, it may operate as a polarization modulator and/or intensity modulator in such a transmitter.

The inventors of the present application have recognized that, by acting independently on the polarization states and using a double pass system, an efficient and robust system can be realized.

Since the same active optical elements, in particular active optical elements, are effectively used twice, the power requirements for the system can be reduced, since the full relative phase modulation does not have to be achieved in one pass through the system. In particular, when active optical modulators, such as electro-optical modulators (EOMs) or acousto-optical modulators (AOMs) are used, this may lower the power requirements of the system.

The optical system may comprise a polarization state preparation unit which is configured to transform an initial polarization state of an optical pulse, in particular a laser pulse, to a superposition of two orthogonal polarization modes, and an active polarization state control unit to apply the relative phase modulation between the orthogonal polarization states by individually applying a phase value to the each of the orthogonal polarization modes.

The two orthogonal polarization modes, between which the relative phase modulation is generated may, in particular, be the states "H" and "V" as defined above. In particular, the polarization modes may comprise $|H\rangle$ and $|V\rangle$ components in equal amplitudes, such that $|D\rangle = \frac{|H\rangle + |V\rangle}{\sqrt{2}}$. The polarization state preparation unit may be configured to transform the initial polarization state into the superposition of the two orthogonal polarization modes using a combination of free-space polarizers and waveplates. The plurality of waveplates and free-space polarizers may be coupled to polarization maintaining fibers, wherein the propagation modes of the fibers coincide with $|H\rangle$ and $|V\rangle$ polarization modes. It is to be noted that the invention is not restricted to the use of $|H\rangle$ and $|V\rangle$ polarization modes, and that any two polarization modes that are orthogonal may be used. Alternatively, the polarization state preparation unit may be configured to transform the initial polarization state into the superposition of the two orthogonal polarization modes using a polarization maintaining circulator with one of its outputs connected to a polarization-maintaining fiber with propagation axis rotated by 45°. In this way, the initial polarization of the pulses, which may be aligned with one of the propagation axes of a polarization-maintaining fiber, may be coupled in equal proportions to the two propagation modes of the polarization-maintaining fiber.

The active polarization state control unit may be configured to individually modify the respective phases of the orthogonal polarization modes.

In other words, the optical system may be configured to prepare, from a single initial optical pulse, two polarization states, which can, for example, be used to encode classical bits. The optical system may further act on these polarization states individually. Thus, the different relative phases required for a particular protocol or implementation of an optical communication method, in particular QKD, may be generated in a robust and efficient way. In particular, when the individually modulated orthogonal polarization modes are re-combined, pulses with different polarization states can be generated in a flexible and efficient manner.

The active polarization state control unit may comprise a time-demultiplexing unit that is configured to apply a specific delay to each of the orthogonal polarization modes. The time-demultiplexing unit may, for example, comprise an unbalanced polarization Mach-Zehnder interferometer (UMZI) that is configured to de-multiplex the two polarization modes in time. It is noted that the delay applied by the time-demultiplexing unit should be greater than the pulse width of the optical pulse. Alternatively or additionally, the double pass unit may comprise a polarization based Sagnac loop, in particular a fiber loop.

The active polarization state control unit may further comprise a phase modulation unit that is configured to individually apply a phase value to the respective time-demultiplexed orthogonal polarization modes. The phase modulation unit may comprise an active device, for example a phase modulator, in particular an electro-optical modulator (EOM).

Alternatively or additionally, the phase modulation unit may comprise two or more phase modulators in series, where their respective modulation axes are rotated by 90°. One or more of the two or more phase modulators may be active devices, in particular EOMs. Such a configuration may further reduce the voltage values required to generate the different relative phase modulations. Further, if one of the two or more phase modulators fails, the optical system would still be able to fulfil its function by adapting the voltage values accordingly. Thus, such a configuration may be useful for application where high redundancy of the optical system is required.

The active polarization state control unit may further comprise a double pass unit configured to enable multiple passages of the respective time-demultiplexed polarization modes through the phase modulation unit and/or the time-demultiplexing unit. In particular, the double pass unit may be configured to further apply a rotation, in particular by 90°, to the respective time-demultiplexed polarization modes. In other words, the double pass unit may be configured to flip or swap the polarization modes. The double pass unit may, for example, comprise a Faraday Mirror or Faraday Rotator. Alternatively or additionally, the double pass unit may comprise a polarization based Sagnac loop, in particular a fiber loop mirror.

Employing the double pass unit such that the time-demultiplexed polarization modes re-enter the phase modulation unit and/or the time-demultiplexing unit has the advantage that the full phase modulation has not have to be applied to the time-demultiplexed polarization modes in one pass through the phase modulation unit and/or the time-demultiplexing unit. The phase applied by the phase modulation unit is typically dependent on the voltage applied to or used by an active element of the phase modulation unit, for example an EOM. As such, the voltage applied to or used by the active element of the phase modulation unit may be lower in the described double pass configuration. In particular, the required modulation voltage values may be halved compared to single-path schemes. This be may advantageous since higher applied voltages may lead to instabilities and lower the lifetime of the active elements. Further, if the double pass unit causes the time-demultiplexed polarization modes to re-enter the time-demultiplexing unit from the opposite direction, the time-demultiplexed polarization modes may be re-combined to an optical pulse with a specific desired polarization mode.

Generally, the combined effect of the time de-multiplexing unit, the active polarization state control unit, and the double pass unit may provide the optical system with the ability to generate different polarization states using low operating voltage compared to standard devices based on the same phase modulators. Further, as the polarizations are time-multiplexed, joint modulation phase effects may be avoided.

In an alternative embodiment, the active polarization state control unit may comprise a spatial de-multiplexing unit with at least two optical branches. The spatial de-multiplexing unit may be configured to pass each of the two orthogonal polarization modes through a different of the at least two optical branches. In particular, the spatial de-multiplexing unit may comprise a UMZI. In this embodiment, a phase modulator may be arranged in at least one of the two optical branches of the spatial de-multiplexing unit. As such, the polarization mode passing through this branch will be subject to a phase modulation that is different from a phase modulation that is applied to the polarization mode that passes through the other optical branch. It is also possible that a phase modulator is arranged in each of the at least two optical branches.

The spatial de-multiplexing unit may further be configured to re-combine the optically/spatially demultiplexed modes when they exit the spatial de-multiplexing unit. The embodiments using a spatial de-multiplexing unit may allow for a higher repetition rate compared to those using a time de-multiplexing unit.

The optical system may further include a pulse generation unit. The pulse generation unit may be configured to generate short optical pulses with a length between 50 ps and 1000 ps. The pulse generation unit may be configured to generate optical pulses with a pre-determined polarization. In particular, the pulse generation unit may be configured to generate optical pulses with the initial polarization state. The pulse generation unit may comprise a laser.

In particular, the pulse generation unit may comprise a single laser configured to generate faint coherent pulses, where the term "faint" is used in accordance with its usual understanding in the art to indicate pulses exhibiting Poissonian photon number distribution with a mean value lower than one photon per pulse. Using only one laser may ensure that no wavelength distinguishability attack is possible. It may also reduce the number active parts of the transmitter compared with the multiple laser schemes. In particular, the pulse generation unit may comprise a single directly driven distributed feedback (DFB) laser to generate the optical pulses. The optical system may comprise one or more optical components to prepare the generated optical pulses into the initial polarization state.

The optical system may further comprise an electronic control unit configured to control the pulse generation unit and/or the active polarization state unit to allow synchronized operation with other devices and/or to control the polarization modulation. In particular, the electronic control unit may be configured to generate analog and/or digital signals with a pre-determined timing to control the polarization modulation.

In particular, the electronic control unit may be configured to generate a signal pattern to generate the different polarization states. The signal pattern may comprise at least a first signal and one or more second signals. The first signal may be a digital signal sent to the pulse generation unit to trigger the optical pulse generation. The period of this first signal may determine the symbol repetition rate of the system. The one or more second signals may be used to generate the relative phase modulation, which determines the prepared polarization states. In particular, the one or more second signals may cause a pre-determined voltage to be applied to the active element of the phase modulation unit, in particular an EOM, for a pre-determined time.

In the following, an exemplary signal pattern that can be used to prepare different polarization states with the optical system will be described. Depending on the number of polarization states and the voltages needed for a particular optical communication protocol, the signals may be digital signals or analog signals. A pattern that minimizes the voltage required for preparing each polarization state may depend on a relation of the different optical path delays within the optical system.

For the case of two polarization modes which pass though the optical system with a time-demultiplexing unit twice, four distinct time points may be designated as $e_1$, $e_2$, $l_1$ and $l_2$. Here, "e" is short for early and "l" for late, representing the order of the polarization pulses exiting the time-demultiplexing unit, in particular, the UMZI. In other words, "e" refers to the time-demultiplexed polarization mode exiting the time-demultiplexing unit first, and "l" refers to the time-demultiplexed polarization mode exiting the time-demultiplexing unit second. The subscript denotes whether the pulse is on the outbound, i.e. first, pass through the phase modulator modulation unit, indicated by index "1", or the inbound, i.e. second, pass through the phase modulator modulation unit, indicated by index "2".

For example, the time delay $dt_{TDU}$ added by the time-demultiplexing unit may be smaller than the total roundtrip time $dt_{RT}$ after the time-demultiplexing unit, which may include the time it takes to pass through the phase modulation unit a first time, the double pass unit (e.g., the Faraday mirror), and the phase modulation unit a second time. In this case, i.e., if $dt_{TDU} < dt_{RT}$, the order of the pulses passing through phase modulation unit may be as follows: e1, l1 e2, l2. As such, the one or more second signals of the signal pattern may, for example, cause the following voltages to be applied to an active element of the phase modulation unit, in particular an EOM, in temporal order:

1. A first voltage value $V_1$ for a duration that corresponds to the time it takes the mode e to pass the phase modulation unit on the outbound pass.

2. A second voltage value $V_2$ for a duration that corresponds to the time it takes the mode l to pass the phase modulation unit on the outbound pass.

3. The first voltage value $V_1$ for a duration that corresponds to the time it takes the mode e to pass the phase modulation unit on the inbound pass.

4. The second voltage value $V_2$ for a duration that corresponds to the time it takes the mode l to pass the phase modulation unit on the inbound pass.

On the other hand, if $dt_{TDU} > dt_{RT}$, the passing order of the pulses through the phase modulation unit may be the following: e1, e2, 11, 12. In this case, the one or more second signals of the signal pattern may, for example, cause the following voltages to be applied to an active element of the phase modulation unit, in particular an EOM, in temporal order:

1. A first voltage value $V_1$ for a duration that corresponds to the combined time it takes the mode e to pass the phase modulation unit on the outbound pass and the inbound pass.

2. A second voltage value $V_2$ for a duration that corresponds to the combined time it takes the mode l to pass the phase modulation unit on the outbound pass and the inbound pass.

It is to be noted that the voltage values and durations depend on the final desired polarization state.

It has been found by the present inventors that the implementation of the optical system such that $dt_{TDU} > dt_{RT}$, may allow for a lower bandwidth electrical signal compared with the case in which $dt_{TDU} < dt_{RT}$. However, in principle, these two modulation patterns may generate the same effect over the relative phase of the prepared pulses.

In view of the above, the temporal evolution of the initial polarization mode of the optical pulse in an embodiment of the optical system which is implemented such that $dt_{TDU} < dt_{RT}$ may be mathematically described as follows in terms of the polarization modes $|H\rangle$ and $|V\rangle$:

$$|\Psi_{t0}\rangle = \frac{|H\rangle + |V\rangle}{\sqrt{2}}$$

$$|\Psi_{t1}\rangle = \frac{e^{i\phi_{e1}}|H, e_1\rangle + e^{i\phi_{l1}}|V, l_1\rangle}{\sqrt{2}}$$

$$|\Psi_{t2}\rangle = \frac{-e^{i(\phi_{e1}+\phi_{e2})}|V, e_2\rangle + e^{i(\phi_{l1}+\phi_{l2})}|H, l_2\rangle}{\sqrt{2}}$$

$$|\Psi_{t3}\rangle = \frac{|H\rangle - e^{i(\phi_{e1}+\phi_{e2}-\phi_{l1}-\phi_{l2})}|V\rangle}{\sqrt{2}}$$

Here, $\phi_{xy}$ represents the phase gained by the polarized pulse as it passes through the phase modulation unit at the time $x_y$. The times t0 to t3 denote the following times: At time t0, the optical pulse has not yet entered the time-demultiplexing unit. At time t1, both e and l have passed the phase modulation unit for the first time. At time t2, both e and l have passed the phase modulation unit for the second time. At time t3, both e and l have passed the time-demultiplexing unit for the second time, such that they are again multiplexed in time.

As is apparent from the term describing $|\Psi_{t3}\rangle$, the contribution of the phase modulations from the different polarization modes should have different signs to generate an additive effect, and thus giving the lowest possible value for the maximum voltage to reach the full set of states.

It is to be noted that, in particular, $|\Psi_{t1}\rangle$ may have a different form in the case where $dt_{TDU} > dt_{RT}$, however, $|\Psi_{t3}\rangle$ will take the same form as above.

The optical system may further comprise an intensity modulation unit configured to modify the intensity of the optical pulse. This may enable the optical system to operate in a decoy-state protocol, in particular the decoy-state BB84 protocol, as described further above. The intensity modulation unit may, for example, comprise a polarization modulator followed by a linear polarizer. In this way, the relative intensity of the pulses may be selected by changing the polarization states from parallel to orthogonal polarization states respect to the one transmitted by the polarizer. The intensity modulation unit may be located upstream of active polarization state control unit.

One or more of the sub-units of the optical system may be provided as a photonic integrated circuit, in particular formed of optical waveguides. For example, instead of using free-space propagation or optical fiber, optical waveguide devices may be used, such as integrated electro-optic phase and intensity modulators, delay lines, splitters and couplers. Thus, the optical system may be realized in a compact manner.

The optical system may further be configured to be coupled to free-space and/or fiber optical channels input and/or output channels. Thus, it may be used in any optical communication system.

The optical system may further comprise one or more power meters. The power meters may be used, for example, to estimate an output mean photon number per pulse or a balance between $|H\rangle$ and $|V\rangle$ polarizations at the input of the time-demultiplexing unit or the spatial de-multiplexing unit.

The invention further provides a transmitter for optical communication for either fiber-based or free-space based optical communication comprising the optical system, wherein the optical system may comprise one or more of the above-defined features.

In particular, the transmitter may be configured to implement a Quantum Key Distribution, QKD, protocol with polarization encoding and intensity modulation, in particular as BB84-like protocols with 3 states or 4 states including the implementation of a decoy state method.

The invention further provides a method for applying a relative phase to orthogonal optical polarization modes comprising:

- Preparing an initial polarization state of an optical pulse.

- Transforming the initial polarization state into two orthogonal polarization modes.

- Demultiplexing the two orthogonal states in time or space.

- Applying phase modulations to the demultiplexed orthogonal states individually.

The method may further comprise re-combining the demultiplexed orthogonal polarization modes after the respective phase modulations have been applied.

The method may be performed by an optical system which comprises one or more of the above-defined features.

**Brief description of the drawings**

Advantageous embodiments will now be described in combination with the enclosed figures.

Figure 1     schematically shows a transmitter for optical communication;

Figure 2     schematically shows an active polarization state control unit;

Figure 3     schematically shows an active polarization state control unit;

Figure 4     schematically shows signal patterns used to generate desired final polarization states; and

Figure 5     schematically shows signal patterns used to generate desired final polarization states.

**Detailed description of the invention**

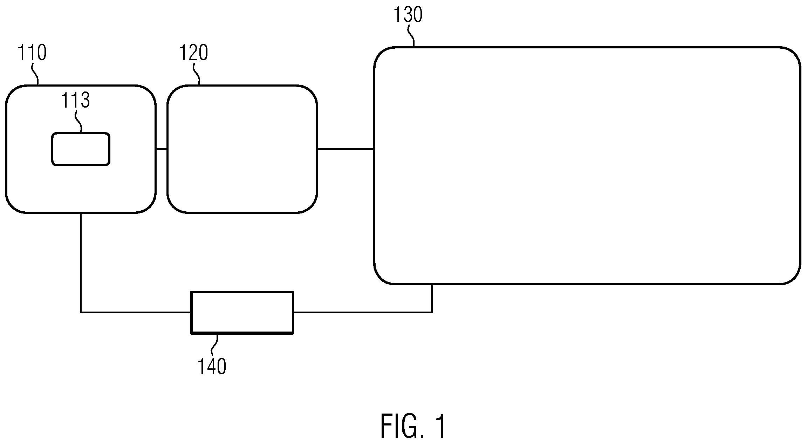

Figure 1 schematically shows a transmitter 100 for optical communication. The transmitter 100 comprises a pulse generation unit 110, a polarization state preparation unit 120, an active polarization state control unit 130, and an electronic control unit 140. The pulse generation unit 110 comprises a high bandwidth driven DFB laser 113 driven by an electrical pulse generator 111 and an electrical driver 112. The polarization state preparation unit 120 comprises a plurality of optical elements in a free-space configuration and is configured to transform an initial polarization state of an optical pulse generated by the pulse generation unit 110 into a superposition of two orthogonal polarization modes.

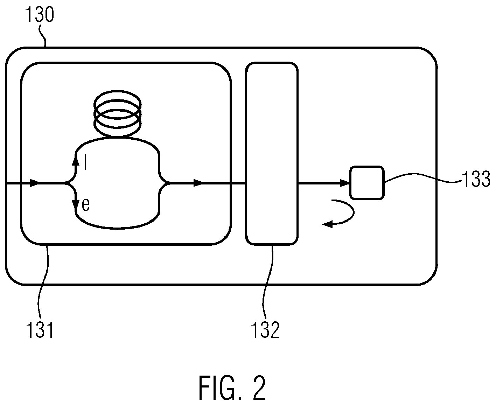

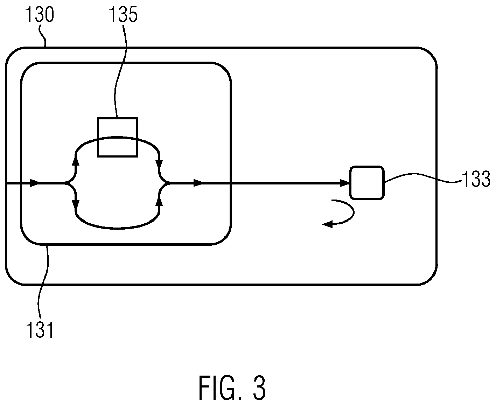

The active polarization state control unit 130 is configured to time-demultiplex or spatially/optically demultiplex the two orthogonal polarization modes and individually apply a phase value to each of the orthogonal polarization modes. Embodiments of the active polarization state control unit 130 are described in the following with respect to Figures 2 and 3.

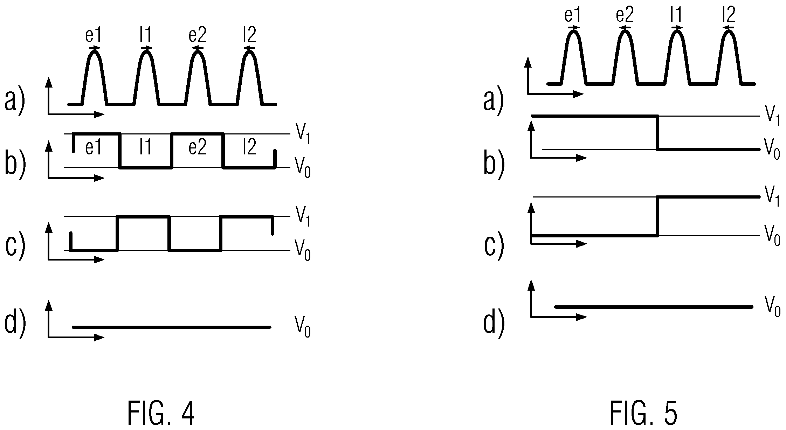

The electronic control unit 140 is configured to communicate with the pulse generation unit 110 and the active polarization state control unit 130. The electronic control unit 140 is further configured to generate signal patterns to control the pulse generation unit 110 and the active polarization state control unit 130 in order to generate an optical pulse with a desired polarization state. Examples of the signal patters are described with reference to Figures 4 and 5 below.

Figure 2 shows an embodiment of the active polarization state control unit 130 comprising a time-demultiplexing unit 131, a phase modulation unit 132, and a double pass unit 133. In the illustrated embodiment, the time-demultiplexing unit 131 comprises a polarization based unbalanced polarization Mach-Zehnder interferometer (UMZI). The phase modulation unit 132 comprises an electro-optical modulator (EOM). The double pass unit 133 comprises a Faraday mirror.

The inbound path of an optical pulse through the active polarization state control unit 130 is indicated by the arrows in Figure 2. An optical pulse comprising two orthogonal polarization modes first enters the time-demultiplexing unit 131, which separates the two orthogonal polarization modes by a time delay $dt_{TDU}$, resulting in an early mode e, and a late mode I. This is indicated by the loops shown in the upper branch of the time-demultiplexing unit 131. The early mode e and the late mode I then pass through the phase modulation unit 132 at different times. The phase modulation unit 132 applies a pre-determined phase value individually to the modes e and I. After passing the phase modulation unit 132 for a first time, the modes e and I pass through the double pass unit 133, which reflects the modes and inverts their polarization. This is indicated by the U-shaped arrow located near the double pass unit 133. The modes e and I then pass through the phase modulation unit 132 a second time, and a pre-determined phase value is applied individually to the modes e and I a second time. Finally, the modes e and I pass through the time-demultiplexing unit 131 in opposite direction, such that they re-combine again. The resulting optical pulse will have a polarization state that is determined by the phase values applied to the modes e and I in during their passes through the phase modulation unit 132.

Figure 3 shows another embodiment of the active polarization state control unit 130 comprising a spatial demultiplexing unit 134. The spatial demultiplexing unit 134 comprises a UMZI with two optical branches. It can be seen that a phase modulator 135 is arranged in the lower of the optical branches of the UMZI. The phase modulator 135 may comprise an EOM. It is noted that the arrangement of the phase modulator 135 in the upper branch is merely illustrative. Further, it is possible that a second phase modulator (not shown) is arranged in the lower branch of the UMZI.

The inbound path of an optical pulse through the active polarization state control unit 130 is also indicated by the arrows in Figure 3. An optical pulse comprising two orthogonal polarization modes first enters spatial demultiplexing unit 134, which separates the two orthogonal polarization modes and sends it along the two different optical branches. The polarization mode passing through the lower branch of the UMZI passes through the phase modulator 135, and an individual phase is applied to the mode. At the exit of the UMZI, the polarization modes are re-combined and reflected back by the double pass unit 133, in particular the Faraday mirror, for a second pass through the phase modulator 135. This is indicated by the U-shaped arrow located near the double pass unit 133. The resulting optical pulse will have a polarization state that is determined by the phase values applied to the mode passing through the phase modulator 135.

Figure 4 schematically shows digital signal patterns generated by the electronic control unit 140 for an embodiment of the polarization state control unit 130 as illustrated in Figure 2, where the time delay $dt_{TDU}$ added by the time-demultiplexing unit 131 is smaller than the total roundtrip time $dt_{RT}$ after the time-demultiplexing unit 131, $dt_{TDU} < dt_{RT}$. In the illustrated embodiment, the signal patterns are digital signal patterns used to generate the final states $|R\rangle$, $|L\rangle$, and $|A\rangle$, starting from the two states $|H\rangle$ and $|V\rangle$. In particular, in the illustrated embodiment, the initial polarization state prepared, e.g., by the polarization state preparation unit 120 is the state $|A\rangle$.

In all plots shown in Figure 4, the horizontal axis denotes time. From top to bottom, Figure 4 shows:

- 4a: Optical intensity in the phase modulation unit 132. It can be seen that, first, the mode e passes the phase modulation unit 132 for the first time. Then, the mode I passes the phase modulation unit 132 for the first time. After this, the mode e passes the phase modulation unit 132 for the second time and finally, the mode I passes the phase modulation unit 132 for the second time.

- 4b: Voltage values applied to the phase modulation unit 132 in order to obtain a final polarization state $|R\rangle$.

- 4c: Voltage values applied to the phase modulation unit 132 in order to obtain a final polarization state $|L\rangle$.

- 4d: Voltage values applied to the phase modulation unit 132 in order to obtain a final polarization state $|A\rangle$.

It can be seen that, in order to obtain the final polarization state $|R\rangle$ and final polarization state $|L\rangle$, the voltages applied to the phase modulation unit 132 are set to alternate between a first value $V_1$ and a second value $V_2$ whenever one of the modes e and I passes through the phase modulation unit 132. It can further be seen that the sequence of voltage values is inverted when comparing the sequence to obtain the final polarization state $|R\rangle$ and the sequence to obtain the final polarization state $|L\rangle$. To obtain the state $|R\rangle$, a total relative phase of $\dfrac{\pi}{2}$ is added between the modes e and I. To obtain the state $|L\rangle$, a total relative phase of $-\dfrac{\pi}{2}$ is added between the modes e and I. In contrast, in order to obtain the final polarization state $|A\rangle$, the voltage value applied to the phase modulation unit 132 is kept at a constant value, thus that no relative phase is added between the modes a and I.

Figure 5 schematically shows digital signal patterns generated by the electronic control unit 140 for an embodiment of the polarization state control unit 130 as illustrated in Figure 2, where the time delay $dt_{TDU}$ added by the time-demultiplexing unit 131 is larger than the total roundtrip time $dt_{RT}$ after the time-demultiplexing unit 131, $dt_{TDU} > dt_{RT}$. In the illustrated embodiment, the signal patterns are digital signal patterns used to generate the final states $|R\rangle$, $|L\rangle$, and $|A\rangle$, starting from the two states $|H\rangle$ and $|V\rangle$. As in Figure 4a, in the illustrated embodiment, the initial polarization state prepared, e.g., by the polarization state preparation unit 120 is the state $|A\rangle$. Again, the horizontal axis denotes time. From top to bottom, Figure 5 shows:

- 5a: Optical intensity in the phase modulation unit 132. It can be seen that, first, the mode e passes the phase modulation unit 132 for the first time. Then, the mode e passes the phase modulation unit 132 for the second time. After this, the mode I passes the phase modulation unit 132 for the first time and finally, the mode I passes the phase modulation unit 132 for the second time.

- 5b: Voltage values applied to the phase modulation unit 132 in order to obtain a final polarization state $|R\rangle$.

- 5c: Voltage values applied to the phase modulation unit 132 in order to obtain a final polarization state $|L\rangle$.

- 5d: Voltage values applied to the phase modulation unit 132 in order to obtain a final polarization state $|A\rangle$.

It can be seen that, in order to obtain the final polarization state $|R\rangle$, the voltage applied to the phase modulation unit 132 is set to a first value $V_1$ when the mode e passes through the phase modulation unit 132 for the first and second time, and to a second value $V_2$ when the mode I passes through the phase modulation unit 132 for the first and second time. In order to obtain the final polarization state $|L\rangle$, the voltage applied to the phase modulation unit 132 is set to the second value $V_2$ when the mode e passes through the phase modulation unit 132 for the first and second time, and to the first value $V_1$ when the mode I passes through the phase modulation unit 132 for the first and second time. As in Figure 4, in order to obtain the final polarization state $|A\rangle$, the voltage value applied to the phase modulation unit 132 is kept at a constant value.

It is noted that these signal patterns are exemplary and different signal patterns may be used to obtain different final polarizations. In particular, a sequence resulting in a relative phase between the modes e and I would result in a final polarization state final polarization state $|D\rangle$.

From Figures 4 and 5, it is apparent that the optical system can be used to prepare at least three different polarization states from an initial optical pulse. As such, it is apparent that the system can, in particular, be used for the implementation of the BB84 protocol with three states.

It is noted that it is also possible to use analog signals instead of digital signal patterns. In this case, the voltage values may be adjusted gradually as the modes e and I pass through the phase modulation unit 132 instead of binary as shown in Figures 4 and 5.

Although the previously discussed embodiments and examples of the present invention have been described separately, it is to be understood that some or all of the above-described features can also be combined in different ways. The above discussed embodiments are particularly not intended as limitations, but serve as examples, illustrating features and advantages of the invention.

This development was partially supported by MCIN with funding from European Union NextGenerationEU (PRTR-C17.11) and by Generalitat de Catalunya.

**Claims**

1. An optical system configured to apply a relative phase modulation between two orthogonal polarization modes using a double pass configuration, wherein the system is configured to act independently on each polarization state.

2. The optical system according to claim 1 comprising:

   a polarization state preparation unit (120) to transform an initial polarization state of an optical pulse, in particular a laser pulse, to a superposition of two orthogonal polarization modes,
   an active polarization state control unit (130) to apply the relative phase modulation between the orthogonal polarization state by individually applying a phase value to the each of the orthogonal polarization modes.

3. The optical system according to claim 2, wherein the active polarization state control unit (130) comprises:

   a time-demultiplexing unit (131) configured to apply a specific delay to each of the orthogonal polarization modes (110);
   a phase modulation unit (132) configured to individually apply a phase value to the respective time-demultiplexed polarization modes; and
   a double pass unit configured (133) to enable multiple passages of the respective time-demultiplexed polarization modes through the phase modulation unit (132) and/or the time-demultiplexing unit (131), in particular wherein the double pass unit (133) is configured to further apply a rotation to the respective time-demultiplexed polarization modes.

4. The optical system according to claim 2, wherein the active polarization state control unit (130) comprises:

   a spatial de-multiplexing unit (134) comprising at least two optical paths configured to pass each of the two orthogonal polarization modes through a different of the at least two optical paths,
   wherein a phase modulator (135) is arranged in at least one of the at least two optical paths; and
   a double pass unit (133) configured to enable multiple passages of the respective polarization modes through the phase modulation unit (132) and/or the spatial demultiplexing unit (134), in particular wherein the double pass unit (133) is configured to further apply a rotation to the respective spatially demultiplexed polarization modes.

5. The optical system according to any of the preceding claims, further comprising a pulse generation unit (110) configured to generate short optical pulses, in particular further comprising one or more optical elements configured to prepare the generated optical pulses into the initial polarization state.

6. The optical system according to claim 5, further comprising an electronic control unit (140) configured to control the pulse generation unit (110) and the active polarization state control unit (130) to allow synchronized operation with other devices and to control the polarization modulation.

7. The optical system according to claim 6, wherein the electronic control unit (140) is configured to generate analog and/or digital signals with a pre-determined timing to control the polarization modulation.

8. The optical system according any of the preceding claims, further comprising an intensity modulation unit configured to modify the intensity of the optical pulse.

9. The optical system according to any of the preceding claims, wherein any of its sub-units is provided as a photonic integrated circuit.

10. The optical system according to any of the preceding claims, wherein the optical system is configured to be coupled to free-space and/or fiber optical channels.

11. Transmitter (100) for optical communication for either fiber-based or free-space based optical communication comprising the optical system according to any of the preceding claims.

12. The transmitter (100) according to claim 11, wherein the transmitter (100) is configured to implement a Quantum Key Distribution, QKD, protocol with polarization encoding and intensity modulation, in particular as BB84-like protocols with 3 states or 4 states including the implementation of a decoy state method.

13. Method for applying a relative phase to orthogonal optical polarization modes comprising:

Preparing an initial polarization state of an optical pulse;
Transforming the initial polarization state into two orthogonal polarization modes;
Demultiplexing the two orthogonal states in time or space; and
Applying phase modulations to the demultiplexed orthogonal states individually.

14. The method according to claim 11, further comprising re-combining the modulated time-demultiplexed orthogonal states.

FIG. 1

EP 4 351 043 A1

EP 4 351 043 A1

FIG. 2

FIG. 3

FIG. 4

FIG. 5

EP 4 351 043 A1

| | Europäisches Patentamt<br>European Patent Office<br>Office européen des brevets | **EUROPEAN SEARCH REPORT** | Application Number<br><br>EP 22 38 2931 |
| --- | --- | --- | --- |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
| --- | --- | --- | --- |
| X | US 2004/005056 A1 (NISHIOKA TSUYOSHI [JP]<br>ET AL) 8 January 2004 (2004-01-08)<br>* figure 1 *<br>* paragraphs [0003], [0004], [0048],<br>[0060], [0064] – [0066] *<br>----- | 1-14 | INV.<br>H04B10/70<br>H04B10/50 |
| X<br><br>A | US 6 188 768 B1 (BETHUNE DONALD STIMSON<br>[US] ET AL) 13 February 2001 (2001-02-13)<br>* column 8, line 51 – column 9, line 14;<br>figure 5a *<br>----- | 1-10,13,<br>14<br>11,12 | |
| | | | TECHNICAL FIELDS<br>SEARCHED (IPC)<br><br>H04B |

The present search report has been drawn up for all claims

| Place of search | Date of completion of the search | Examiner |
| --- | --- | --- |
| Munich | 16 March 2023 | Ganzmann, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 38 2931

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2023

| Patent document cited in search report | | Publication date | Patent family member(s) | | Publication date |
|---|---|---|---|---|---|
| US 2004005056 | A1 | 08-01-2004 | AU | 8443501 A | 22-03-2002 |
| | | | AU | 2001284435 B2 | 23-09-2004 |
| | | | CA | 2420447 A1 | 25-02-2003 |
| | | | CN | 1452727 A | 29-10-2003 |
| | | | EP | 1324101 A1 | 02-07-2003 |
| | | | JP | 4060551 B2 | 12-03-2008 |
| | | | JP | 2002156615 A | 31-05-2002 |
| | | | KR | 20030032012 A | 23-04-2003 |
| | | | TW | 571143 B | 11-01-2004 |
| | | | US | 2004005056 A1 | 08-01-2004 |
| | | | WO | 0221196 A1 | 14-03-2002 |
| US 6188768 | B1 | 13-02-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GISIN, NICOLAS et al.** Quantum cryptography. *Reviews of modern physics,* 2002, vol. 74 (1), 145
- A Guide to the Deployment of Global Quantum Key Distribution Networks. **WANG, JING ; BERNARDO A. HUBERMAN.** Future of Information and Communication Conference. Springer, 2022
- **LO, HOI-KWONG ; XIONGFENG MA ; KAI CHEN.** Decoy state quantum key distribution. *Physical review letters,* 2005, vol. 94 (23), 230504
- **KO, HEASIN et al.** High-speed and high-performance polarization-based quantum key distribution system without side channel effects caused by multiple lasers. *Photonics Research,* 2018, vol. 6 (3), 214-219
- **GRÜNENFELDER, F. ; BOARON, A. ; RUSCA, D. ; MARTIN, A. ; ZBINDEN, H.** Performance and security of 5 GHz repetition rate polarization-based quantum key distribution. *Applied Physics Letters,* 2020, vol. 117 (14), 144003